# EUROPÄISCHE PATENTSCHRIFT

(11) **EP 1 453 752 B1**
(45) Veröffentlichungstag und Bekanntmachung des Hinweises auf die Patenterteilung: **22.03.2006**
(21) Anmeldenummer: 02787750.5
(22) Anmeldetag: 21.11.2002
(51) Int. Cl.: B66B 1/00

(54) **ROLLSTEIG MIT GERINGER UMLAUFBAUHÖHE**
ESCALATOR WITH A SMALL PERIPHERAL HEIGHT
TROTTOIR ROULANT PRESENTANT UNE HAUTEUR PERIPHERIQUE REDUITE

(30) Priorität: 15.12.2001 DE 10161759
(43) Veröffentlichungstag der Anmeldung: 08.09.2004
(73) Patentinhaber: Kone Corporation, 03300 Helsinki (FI)
(72) Erfinder: PIETZ, Alexander, 14193 Berlin-Grunewald (DE)
(74) Vertreter: Spannagel, Hans-Achim
(86) Internationale Anmeldenummer: PCT/EP2002/013040
(87) Internationale Veröffentlichungsnummer: WO 2003/051754

(56) Entgegenhaltungen:
- EP-A- 0 960 840
- DE-A- 1 816 611
- FR-A- 2 807 018
- GB-A- 2 173 757
- GB-A- 2 299 316
- US-A- 2 973 084
- US-A- 4 004 676

## Beschreibung

Die Erfindung betrifft einen Rollsteig mit geringer Umlaufbauhöhe.

Der DE-A 22 52 134 ist ein Fahrsteig zum Personentransport, insbesondere ein Flachfahrsteig zur gleichzeitigen Beförderung in beiden Richtungen zu entnehmen, mit einem um die horizontale Achse geführten, im wesentlichen endlosen kettenartigen Strang und einem oder mehreren diesen betätigenden Antrieb(en). Der im wesentlichen endlose kettenartige Strang weist an seiner Außenseite in vorgebbaren Abständen angeordnete Platten bzw. Paletten und an seiner Innenseite Zahnstangen auf, in die die Antriebe beidseitig unmittelbar und formschlüssig eingreifen, wobei der Palettenstrang beidseitig befahrbar ist. Zur formschlüssigen und linearen Verbindung des kettenartigen Stranges bzw. der Zahnstange sind mit den Antrieben an einem endlosen flexiblen Träger, beispielsweise einer Kette oder einem Riemen, befestigte Zahnsegmente vorgesehen. Dieser Fahrsteig ist zwar bereits mit geringer Bauhöhe versehen, da die Paletten um eine Vertikalachse in horizontaler Richtung umlenkbar sind, wobei hier jedoch ein unverhältnismäßig hoher Platzbedarf in der Ebene gegeben ist.

Im deutschen Gebrauchsmuster 201 00 833 ist eine Fahrtreppe oder ein Fahrsteig abgehandelt, mit einem Stufen- oder Palettenband, das von Antriebselementen angetrieben ist, die sich beidseitig des Bandes oder mittig unter dem Band erstrecken und die zwischen je einem Umlenkrad und einem Antriebsrad umlaufen, wobei die Stufen oder Paletten je an Antriebspunkten an jedem Antriebselement angetrieben sind. Das Antriebselement ist als Zahnriemen ausgebildet, der Blöcke aufweist. Je ein Block ist mit einer Stufe oder Palette an dem Antriebspunkt verbunden. Hier ist eine übliche Umlaufform gewählt, wobei anstelle der in der Regel zum Einsatz gelangenden Laschenketten nunmehr Zahnriemen verwendet werden. Da hier übliche Umlaufelemente mit den gegebenen notwendigen Radien zum Einsatz gelangen, ist eine Reduzierung der Bauhöhe der umlaufenden Elemente nicht möglich.

In der GB-A 2 173 757 wird ein Rollsteig beschrieben, der zur Bildung eines umlaufenden Palettenbandes über eine Vielzahl von seitliche Laufrollen beinhaltenden Einzelpaletten verfügt. Eine jede Palette ist seitlich mit jeweils zwei Laufrollen versehen, die sich auf dazugehörigen Laufbahnen abwälzen. Bei Einsatz breiterer Paletten wird etwa auf halber Breite ein Stützkörper unterhalb der Paletten vorgesehen, der in gleitender oder rollender Form mit einer zugehörigen Laufbahn in Wirkverbindung steht.

Ziel des Erfindungsgegenstandes ist es, bei einem Rollsteig mit üblicher Umlenkung der Paletten des Palettenbandes um eine horizontale Achse dennoch eine Reduzierung der Bauhöhe der umlaufenden Elemente, beispielsweise in Bereiche < 500 mm, zu realisieren, ohne daß sich Nachteile beim Personentransport einstellen.

Dieses Ziel wird erreicht durch einen Rollsteig mit geringer Umlaufbauhöhe, beinhaltend eine Vielzahl von ein durchgehendes Palettenband bildenden Palettenstreifen, mit, in Laufrichtung des Palettenbandes gesehen geringer Länge, den Palettenstreifen zugeordneten, unterhalb der jeweiligen Palettenstreifen vorgesehenen, mit selbigen in Wirkverbindung stehenden Mitnahmeelementen sowie mehreren riemenartig ausgebildeten, zum Transport des Palettenbandes dienenden Antriebselementen, wobei die Palettenstreifen, über ihre Breite gesehen, zumindest im Transportbereich mit darunter vorgesehenen Stützelementen in Wirkverbindung stehen.

Vorteilhafte Weiterbildungen des Erfindungsgegenstandes sind den Unteransprüchen zu entnehmen.

Durch die Kombination der erfindungsgemäßen Merkmale, insbesondere die Reduzierung der Länge der Paletten zu Palettenstreifen, wird es nun möglich, bei herkömmlicher Umlenkung der umlaufenden Elemente den Umlenkradius um das jeweilige Umlenkelement wesentlich zu reduzieren, so daß Bauhöhen < 500 mm, vorzugsweise 300 mm, realisiert werden können.

Bekanntermaßen werden Rollsteige üblicherweise in von einem bis zum anderen Ende des Rollsteiges durchgehenden Gruben vorgesehen, so daß hier bauseitig ein verhältnismäßig großer Aufwand betrieben werden muß. Beim Erfindungsgegenstand ist es bedarfsweise lediglich notwendig, die Antriebselemente in entsprechenden Gruben vorzusehen, während der in vertikaler Richtung nur eine geringe Bauhöhe aufweisende Transport- und Rücklaufbereich des Rollsteiges auf einer ebenen nicht ausgehobenen Fläche positioniert werden kann. Sollten Elektromotoren erhältlich sein, deren Abmessungen im Bereich der Palettenumlaufhöhe bleiben, sind auch diese Gruben im wesentlichen entbehrlich. Infolge der geringen Bauhöhe des Rollsteiges ist es lediglich notwendig, eine entsprechende Rampe im Ein- und Ausstiegsbereich des Rollsteiges vorzusehen, wobei auch eine Treppenstufe denkbar ist. Vielfach werden Rollsteige in Flughäfen eingesetzt, wobei zum Teil lange Wege zurückzulegen sind, die auch längere Rollsteigkonstruktionen mit sich bringen. Da der Betreiber derartiger Gebäude nun nicht mehr an lange Gruben zur Aufnahme der Rollsteige gebunden ist, erhöht sich die Flexibilität, zumal die Rollsteige bedarfsweise auch außerhalb bereits geplanter Standorte zum Einsatz gelangen können.

Zur Abstützung des Transportbereiches können unterhalb desselben Stützelemente vorgesehen werden, die je nach auftretender Belastung in entsprechender Anzahl, über die Breite der Palettenstreifen gesehen, anzuordnen sind. Die Stützelemente sind vorteilhafterweise durch Laufrollen gebildet, die auf entsprechenden Führungsbahnen vorgesehen sind, wobei letztere einem weiteren Gedanken der Erfindung gemäß mit elastisch dämpfenden Materialien, beispielsweise Polyurethan, versehen sind, wodurch die Laufruhe beträchtlich erhöht werden kann.

Der Querschnitt der Mitnahmeelemente wird vorzugsweise T-förmig ausgebildet, wobei die größere abgerundete Fläche zur Auflage der Palettenstreifen, respektive der Antriebselemente dient und der außerhalb der Antriebselemente vorhandene jeweilige Schenkel der Mitnahmeelemente in ein entsprechendes Gegenprofil des Umlenkelementes eingreift.

Damit das aus einer Vielzahl von Palettenstreifen bestehende Palettenband auch im Rücklauftrum problemlos bewegt werden kann, sind in den Endbereichen der Palettenstreifen Führungsrollen angeordnet, die im Rücklauftrum auf entsprechenden schienenartigen Führungen vorgesehen sind.

Der Erfindungsgegenstand ist anhand eines Ausführungsbeispieles in der Zeichnung dargestellt und wird wie folgt beschrieben. Es zeigen:
- Figur 1: Prinzipskizze eines Rollsteiges mit geringer Umlaufbauhöhe, beispielsweise eingesetzt in einem Flughafenterminal;
- Figur 2: Darstellung von Palettenstreifen samt Abstützbereich in verschiedenen Ansichten;
- Figur 3: Einzelteildarstellung des Abstützbereiches in verschiedenen Ansichten;
- Figur 4: Prinzipskizze eines segmentartig ausgebildeten Palettenstreifens;

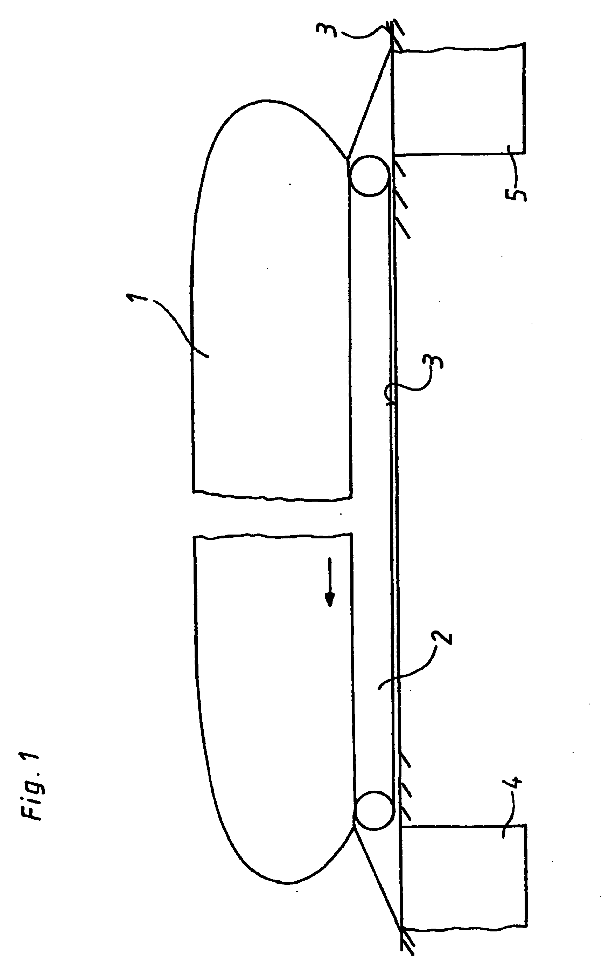

Figur 1 zeigt als Prinzipskizze einen Rollsteig 1 mit geringer Umlaufbauhöhe des zum Transport vorgesehenen Bereiches 2. Der nur angedeutete Rollsteig 1 ist - was in den folgenden Figuren näher erläutert wird - konstruktiv so ausgestaltet, daß er über wesentliche Teile der Transportstrecke gesehen, flach auf der Ebene 3 eines Bodens aufgebaut werden kann. Lediglich im Antriebsbereich 4 und/oder 5 können bedarfsweise Gruben vorgesehen werden, damit die Antriebselemente, wie Motoren, Getriebe oder dergleichen, dort untergebracht werden können.

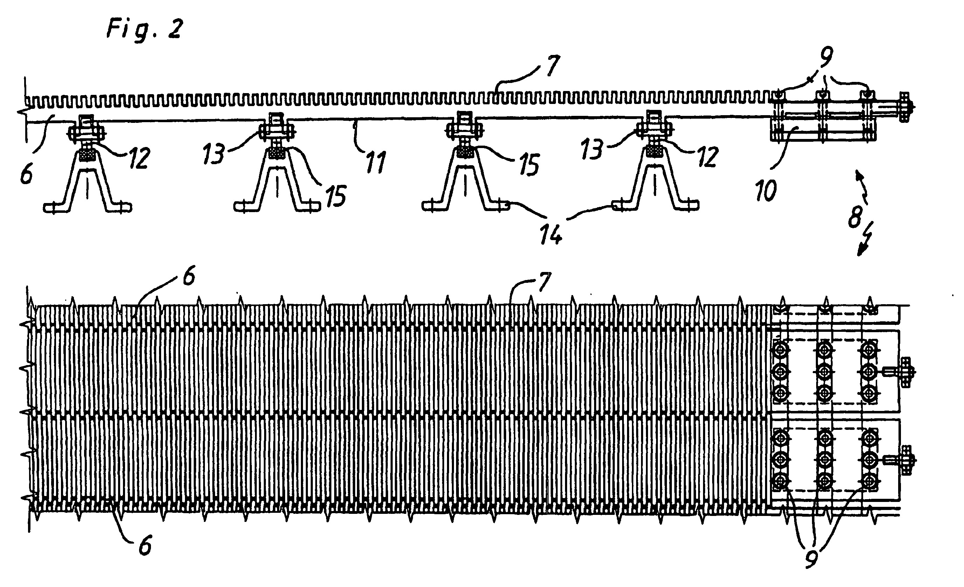

Figur 2 zeigt als Prinzipskizze zwei Palettenstreifen 6 mit, in Transportrichtung gesehen, relativ geringer Länge (a). Die Palettenstreifen 6 sind analog zu den herkömmlichen Paletten für Rollsteige mit äquivalenten Profilen 7 im Transportbereich versehen. Dargestellt ist nur ein Teilbereich der Palettenstreifen 6. Im einen Endbereich 8 der Palettenstreifen 6 sind Befestigungselemente 9 für hier nur angedeutete Mitnahmeelemente 10 vorgesehen, die in den folgenden Figuren näher beschrieben werden.

Über die Breite der Palettenstreifen 6 gesehen, sind in gleichmäßigen Abständen mit der Unterseite 11 der Palettenstreifen 6 verbundene Laufrollen 12 angeordnet, die Ober Bolzen 13 mit dem Palettenstreifen 6 in Wirkverbindung stehen. Im nicht weiter dargestellten Gerüstkörper des Rollsteiges 2 sind Stützelemente 14 vorgesehen, die laufrollenseitig mit geräuschdämpfenden, insbesondere aus Polyurethan bestehenden Laufbahnen 15 ausgerüstet sind, auf denen sich die Laufrollen 12 abstützen.

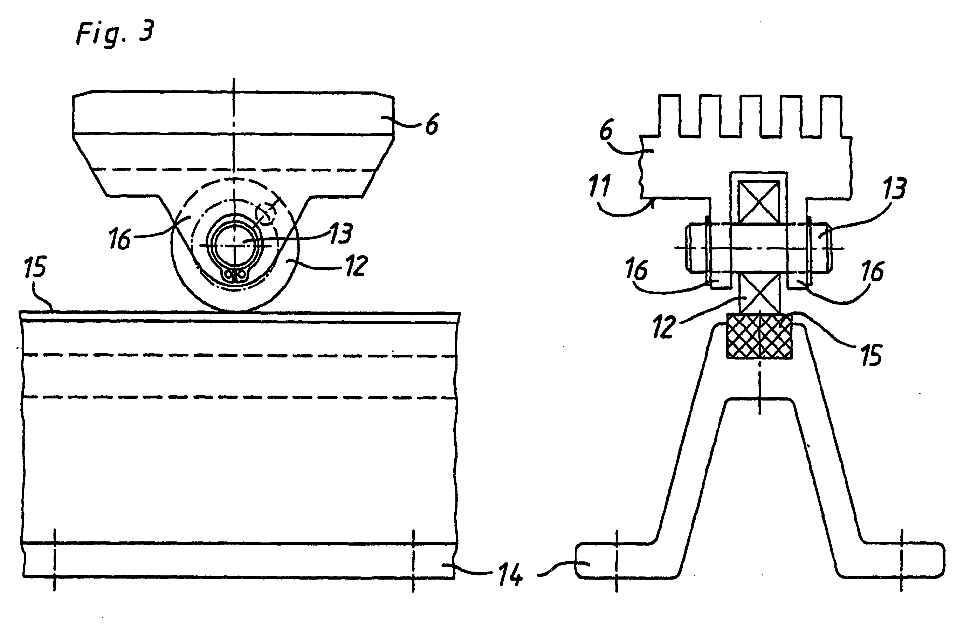

Figur 3 zeigt eine Teildarstellung eines der Stützelemente 14 in vergrößerter Ansicht. Erkennbar ist ein Palettenstreifen 6, eine Laufrolle 12 sowie einer der Bolzen 13 sowie die Führungsbahn 15. In der Unterseite 11 der Palettenstreifen 6 sind mit Ausnehmungen versehene Ansätze 16 angeformt, die zur Aufnahme der Bolzen 13 dienen. Die Palettenstreifen 6 können - wie bei den herkömmlichen Paletten auch - aus Aluminiumdruckguß bestehen. Ebenfalls denkbar ist jedoch auch, sie aus bedarfsweise faserverstärktem Kunststoff zu erzeugen.

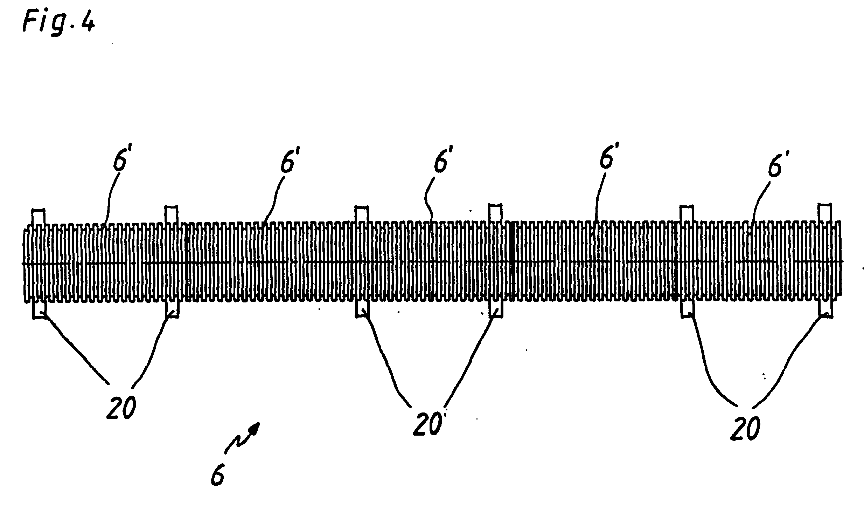

Figur 4 zeigt als Prinzipskizze eines aus Segmenten 6' zusammengesetzten Palettenstreifen 6. Femer angedeutet sind mehrere riemenartige Antriebselemente 20, wobei nicht ein jedes Segment 6' mit einem entsprechenden Antriebselement 20 in Wirkverbindung steht. Unterhalb der Segmente 6' können - wie bereits in den Figuren 2 und 3 zum Ausdruck gebracht - entsprechende Stützelemente vorgesehen werden.

## Patentansprüche

1. Rollsteig mit geringer Umlaufbauhöhe, beinhaltend eine Vielzahl von ein durchgehendes Palettenband bildenden Palettenstreifen (6), mit, in Laufrichtung des Palettenbandes gesehen geringer Länge, den Palettenstreifen (6) zugeordneten, unterhalb der jeweiligen Palettenstreifen (6) vorgesehenen, mit selbigen in Wirkverbindung stehenden Mitnahmeelementen (10) sowie mehreren riemenartig ausgebildeten, zum Transport des Palettenbandes dienenden Antriebselementen (20), wobei die Palettenstreifen (6), über ihre Breite gesehen, zumindest im Transportbereich mit darunter vorgesehenen Stützelementen (14) in Wirkverbindung stehen.

2. Rollsteig nach Anspruch 1, **dadurch gekennzeichnet, daß** die Stützelemente (14) mit Laufrollen (12) in Wirkverbindung stehen, die im Bereich korrespondierender Führungsbahnen (15) der Stützelemente (14) abrollen, wobei die Laufrollen (12) an der Unterseite (11) der Palettenstreifen (6) befestigt sind.

3. Rollsteig nach Anspruch 1 oder 2, **dadurch gekennzeichnet, daß** die Führungsbahn (15) mit elastisch dämpfenden Materialien, insbesondere Polyurethan, versehen sind.

4. Rollsteig nach einem der Ansprüche 1 bis 3, **dadurch gekennzeichnet, daß** die Stützelemente (14) in vorgebbaren Abständen außerhalb des Transportbereiches unterhalb der Palettenstreifen (6) vorgesehen sind.

5. Rollsteig nach einem der Ansprüche 1 bis 4, **dadurch gekennzeichnet, daß** in den freien Endbereichen der Palettenstreifen (6) Führungsrollen für die Abstützung des Palettenbandes, insbesondere im Untertrum, vorgesehen sind.

## Claims

1. A moving walkway with small reversing element diameter, comprising a plurality of pallet strips (6) configured as a continuous pallet band, the pallet strips having a small length, seen in the direction of movement of the pallet band, pulling elements (10), which are associated to the pallet strips (6) beneath each respective pallet strip (6) and are in active relation with the same ones, as well as several belt-type drive elements (20), which serve for the transport of the pallet band, wherein the pallet strips (6), seen over the width thereof, are in active relation, at least in the transport area, with support elements (14) provided beneath this one.

2. A moving walkway according to claim 1, **characterized in that** the support elements (14) are in active relation with rollers (12), which roll in the region of corresponding guiding paths (15) of the support elements (14), wherein the rollers (12) are fixed at the lower face (11) of the pallet strips (6).

3. A moving walkway according to claim 1 or 2, **characterized in that** the guiding paths (15) are provided with elastically damping materials, in particular polyurethane.

4. A moving walkway according to one of the claims 1 through 3, **characterized in that** the support elements (14) are provided at pre-settable distances outside the transport area beneath the pallet strips (6).

5. A moving walkway according to one of the claims 1 through 4, **characterized in that** guiding rolls (25) for supporting the pallet band, in particular in the lower strand, are provided in the free end portions of the pallet strips (6).

## Revendications

1. Trottoir roulant présentant une hauteur de renversement réduite, comprenant une pluralité de bandes de palette (6), qui forment un ruban de palettes continu et qui présentent une longueur faible, vu dans le sens de marche du ruban de palettes, des éléments de poussoir (10) disposés au-dessous des bandes de palette (6) respectives et associés aux bandes de palette (6) et étant en relation active avec celles-ci, ainsi que plusieurs éléments d'entraînement (20) sous forme de courroie et servant de transport du ruban de palettes, les bandes de palette (6), vu sur leur largeur, étant au moins dans la zone de transport en relation active avec des éléments de support (14) prévus au-dessous de celle-ci.

2. Trottoir roulant selon la revendication 1, **caractérisé en ce que** les éléments de support (14) sont en relation active avec des rouleaux (12), qui roulent sur des voies de guidage (15) correspondantes des éléments de support (14), les rouleaux (12) étant fixés à la face inférieure (11) des bandes de palette (6).

3. Trottoir roulant selon la revendication 1 ou 2, **caractérisé en ce que** la voie de guidage (15) est munie des matières d'amortissement élastique, notamment du polyuréthane.

4. Trottoir roulant selon l'une des revendications 1 à 3, **caractérisé en ce que** les éléments de support (14) sont prévus aux intervalles pré-déterminables à l'extérieur de la zone de transport et au-dessous des bandes de palette (6).

5. Trottoir roulant selon l'une des revendications 1 à 4, **caractérisé en ce que** des rouleaux de guidage sont prévus dans les zones d'extrémité libres des bandes de palette (6) pour le support du ruban de palettes notamment dans le brin inférieur.
